# EUROPÄISCHE PATENTSCHRIFT

(11) **EP 1 880 948 B1**
(45) Veröffentlichungstag und Bekanntmachung des Hinweises auf die Patenterteilung: **26.05.2010**
(21) Anmeldenummer: 07011940.9
(22) Anmeldetag: 19.06.2007
(51) Int. Cl.: B65D 1/24, B29C 45/16, B65D 1/48

(54) **Transportkasten und Spritzvorrichtung für einen Transportkasten**
Transport case and injection moulding device for manufacturing such a transport case
Caisse de transport et dispositif de moulage par injection pour la fabrication d'une telle caisse de transport

(30) Priorität: 21.06.2006 AT 10452006
(43) Veröffentlichungstag der Anmeldung: 23.01.2008
(73) Patentinhaber: Haidlmair Holding GmbH, 4542 Nussbach (AT)
(72) Erfinder: Weiermeier, Gerhard, 4560 Kirchdorf an der Krems (AT)
(74) Vertreter: Ofner, Clemens

(56) Entgegenhaltungen:
- EP-A1- 0 260 698
- EP-A1- 1 396 329
- EP-A1- 1 524 092
- EP-A2- 1 410 998
- DE-A1- 10 239 319
- DE-A1- 19 639 486
- DE-T1- 4 480 340
- US-A1- 2003 014 912
- US-A1- 2005 191 379

## Beschreibung

Die Erfindung betrifft einen Transportkasten aus Kunststoff-Spritzguss, insbesondere Flaschenkasten, gemäß dem Oberbegriff des Anspruches 1.

Transportbehälter, insbesondere Flaschenkästen sind in den letzten Jahren aufgrund der Marktanforderungen insbesondere im Bereich Handhabung sowie optisches Erscheinungsbild weiterentwickelt worden. So sind z.B. die ursprünglich relativ scharfkantigen Griffe zu ergonomisch günstigen und für den Kunden angenehm empfundenen, gerundeten Griffen weiterentwickelt worden, zusätzlich werden die Griffe in neuerer Zeit durch angespritzte Umhüllungen mit grifffreundlichem Material weiter verbessert, wodurch speziell der Tragekomfort deutlich verbessert worden ist. Um auch die steigenden ästhetischen Ansprüche der Kunden zu befriedigen und optische Kaufanreize zu bieten, sind die ursprünglich einfärbigen und einfach bedruckten Transportkästen beispielsweise durch Schaffung von weitgehend glatten Seitenwänden und Verwendung von hochwertig bedruckten, mit dem Behälterkörper innig verbundenen Folienelementen, so genannten Einlegeetiketten oder Labels zu attraktiven Verkaufsverpackungen weiterentwickelt worden.

Aus US 2003/0014912 A1 ist ein rotationssymmetrischer Kunststoffbehälter mit einem Boden und mit einer eine kegelstumpfförmigen Mantelfläche ausbildenden Seitenwand bekannt. Der Boden und die Seitenwand sind mehrschalig durch eine Grundschale und einer auf diese aufgebrachte und mit dieser thermisch verbundenen Deckschale gebildet. Der Kunststoffbehälter weist an einem dem Boden entgegen gesetzten, eine Einfüllöffnung umfassenden Randbereich, eine wulstförmig Verstärkung auf, die durch eine Ausbildung von verzahnungsartig ineinander greifender, radial umlaufender, in einem Teilungsabstand zueinander versetzter Rippen der Grund- und der Deckschale gebildet ist.

Aus EP 1396 329 A1 sind ein Verfahren und eine Anlage zum Ausbilden eines Abschnittes eines kastenförmigen Behältnisses sowie ein kastenförmiges Behältnis bekannt. Das kastenförmige Behältnis besteht aus einem Boden und vier senkrecht dazu ausgerichteten Seitenwänden aus einem Kunststoff-Spritzteil. Aus dem Boden ausragend ist zentral im Behältnis ein am Boden angeformter Traggriff angeordnet sowie weisen die Seitenwände etwa rechteckförmige Grifföffnungen auf. Insbesondere im Bereich der Grifföffnungen ist eine zweischalige Ausbildung vorgesehen, wonach auf den in einem ersten Spritzvorgang gespritzten Behälter aus dem Kunststoff in einem nachfolgenden zweiten Spritzvorgang bereichsweise ein bevorzugt zum ersten Kunststoffmaterial unterschiedliches Kunststoffmaterial aufgespritzt wird. In dem zweischaligen Bereich sind Rippen oder Stege an der ersten Spritzschale vorgesehen, wodurch ein verzahnungsartiges Ineinandergreifen der beiden Kunststoffmaterialien und damit eine innige Verbindung erreicht wird.

Aus DE 102 39 319 A1 ist ein aus zwei Komponenten bestehender Kunststoffbehälter, insbesondere Flaschenkasten, mit einem Boden und/oder Behälterwänden, welche mindestens aus einem ersten Kunststoff gebildet sind, bekannt, wobei an dem Boden und/oder den Behälterwänden mindestens ein Bereich zweischalig aus unterschiedlichen Kunststoffen ausgebildet ist die miteinander stoffschlüssig und/oder formschlüssig verbunden sind. Bevorzugt ist der zweite Kunststoff im Bereich von Griffteilen des Behälters vorgesehen um ein angenehmes Greifverhalten zu erreichen.

Aus DE 102 39 319 A1 ist ein Zweikomponenten Kunststoffbehälter, insbesondere Flaschenkasten bekannt, mit einem Boden und Behälterwänden aus einem ersten Kunststoff, bei dem am Boden oder den Behälterwänden ein Bereich aus einem zweiten Kunststoff ausgebildet ist, wobei erster und zweiter Kunststoff stoffschlüssig und/oder formschlüssig starr miteinander verbunden sind, weiters der zweite Kunststoff auf den ersten Kunststoff auf- oder angespritzt ist. Dadurch können die vorteilhaften Eigenschaften von zwei unterschiedlichen Kunststoffen in einem Transportkasten kombiniert werden, z.B. Griffteile mit gummiähnlicher Oberfläche für eine leichtere Handhabung oder farbliche Gestaltungsmöglichkeiten durch Verwendung von zwei unterschiedlich gefärbten Kunststoffen.

Aus der US 4,935,184 A ist ein Verfahren zur Herstellung eines Behälters mit einem durch einen Boden und Seitenwänden begrenzten Innenraum bekannt, der durch aufeinander folgende Spritzvorgänge auf zwei unterschiedliche Eigenschaften aufweisenden Kunststoffmaterialien gebildet ist. Zur Vornahme eines ersten Spritzvorganges wird eine Kernform für den Behälter mit einer ersten Außenform verbunden und das erste Kunststoffmaterial eingespritzt. Nachdem dieses eine gewisse Verfestigung aufweist, wird die Kernform mit dem darauf befindlichen ersten Kunststoffmaterial mit einer zweiten Form zur Ausbildung einer zweiten Kavität kombiniert und das zum ersten Kunststoffmaterial unterschiedliche zweite Kunststoffmaterial eingespritzt. Dabei erfolgt eine thermische Verbindung des ersten Kunststoffmaterials mit dem zweiten Kunststoffmaterial und weist der so gefertigte Behälter unterschiedliche Boden- und/oder Wandbereiche auf, die gänzlich aus einem der beiden Kunststoffmaterialien oder als Laminat des ersten und des zweiten Kunststoffmaterials gebildet sind.

Die Aufgabe der Erfindung ist es, einen Transportkasten, bestehend aus einer Grundschale und einer zumindest bereichsweise auf der Grundschale aufgebrachten Deckschale zu schaffen, der zur verformungsfreien Abtragung einer hohen Stapellast ausgebildet ist.

Diese Aufgabe der Erfindung wird durch die im Kennzeichenteil des Anspruches 1 wiedergegeben Merkmale erreicht. Der überraschende Vorteil dabei ist, dass durch die erfindungsgemäße Ausbildung der Verbindungsbereiche mit den an der Grundschale und der Deckschale angeordneten und verzahnungsartig ineinander greifenden Erhöhungen verstärkte Wand- oder Deckbereiche geschaffen werden, die in Art eines tragfähigen Skeletts wirken, ohne dass Materialanhäufungen in diesen Bereichen zu Oberflächenbeeinflussungen am fertigen Transportkasten führen.

Möglich sind dabei vorteilhafte Weiterbildungen, wie in den Ansprüchen 2 und 3 beschrieben, wodurch eine hohe Belastbarkeit durch Stapelkräfte ohne Veränderung des Schlichtmaßes erreicht wird, da die Verstärkungszonen im gerundeten Eckbereich verlaufen, ohne dass die generellen Abmaße für Breite und Länge des Transportkastens verändert sind.

Weitere vorteilhafte Ausbildungen beschreiben die Ansprüche 4 bis 7, wodurch zusätzliche designmäßige Ausbildungen des Transportkastens erreicht werden.

Durch die im Anspruch 8 beschriebene vorteilhafte Weiterbildung wird eine hohe Aufnahmekapazität des Transportkastens bei guter seitlicher Abstützung des Transportgutes erreicht.

Die in den Ansprüchen 9 bis 11 beschriebenen Weiterbildungen gewährleisten verwindungssteife Eckbereiche bei einem wirtschaftlichen Materialeinsatz.

Durch die in den Ansprüchen 12 bis 15 gekennzeichneten vorteilhaften Ausbildungen werden für den jeweiligen Einsatzfall entsprechende Variationen im Aufbau der Grundschale und Deckschale erreicht.

Möglich ist aber auch eine Ausbildung nach Anspruch 16, mit der eine Überdeckung von in zu einer Aufstandsfläche vertikaler Ausrichtung verlaufender Verbindungsflächen zwischen der Grundschale und der Deckschale erreicht wird.

Gemäß der im Anspruch 17 gekennzeichneten vorteilhaften Ausbildung wird eine Seitenwandaussteifung zur Verhinderung einer Ausbeulung bei Druckbelastung erreicht.

Es ist aber auch eine Ausbildung nach Anspruch 18 vorteilhaft, weil dadurch durch Wahl von Materialien mit unterschiedlichen Eigenschaften den unterschiedlichen Anforderungen, wie sie an den Innenraum und die Außenfläche zu stellen sind, Rechnung getragen wird.

Vorteilhaft ist aber auch eine Ausbildung nach Anspruch 19, wodurch eine Materialeinsparung an den Seitenwänden erreicht wird.

Schließlich gewährleisten die in den Ansprüchen 20 und 21 genannten Materialien einen hochfesten Verbund bei einer zweistufigen Fertigung in einem ersten und einem zweiten Spritzvorgang.

Zum besseren Verständnis der Erfindung wird diese anhand der in den Figuren gezeigten Ausführungsbeispiele näher erläutert.

Es zeigen:
- Fig. 1: ein erfindungsgemäßer Transportkasten in schematischer Darstellung;
- Fig. 2: der Transportkasten geschnitten gemäß den Linien II-II in Fig. 1;
- Fig. 3: eine Detaildraufsicht eines Eckbereiches des erfindungsgemäßen Transportkastens;
- Fig. 4: der Transportkasten geschnitten gemäß den Linien IV-IV in Fig. 1;
- Fig. 5: ein Eckbereich des erfindungsgemäßen Transportkastens mit Formwerkzeugen zur Bildung einer Grundschale des Transportkastens, geschnitten;
- Fig. 6: der Eckbereich des Transportkastens mit Formwerkzeugen nach Aufspritzen einer Deckschale, geschnitten;
- Fig. 7: eine andere Ausbildung des Eckbereiches mit Formwerkzeugen zur Herstellung der Grundschale, geschnitten;
- Fig. 8: der Eckbereich mit Formwerkzeugen nach Aufspritzen der Deckschale, geschnitten;
- Fig. 9: eine andere Ausbildung des erfindungsgemäßen Transportkastens, geschnitten ge- mäß den Linien IX-IX in Fig. 10;
- Fig. 10: der Transportkasten geschnitten gemäß den Linien X-X in Fig. 9;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

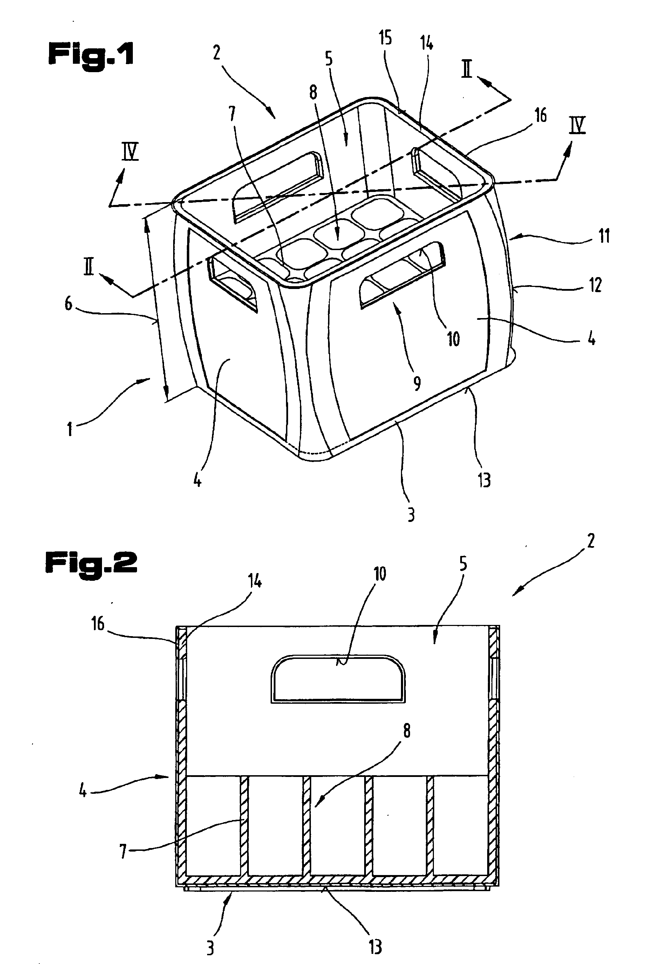

In den Fig. 1 und 2 ist ein Transportkasten 1, insbesondere Flaschenkasten 2, bevorzugt aus Kunststoff-Spritzguss, mit durch einen Boden 3 und im Wesentlichen ebenen jeweils zueinander in einem rechten Winkel angeordneten Seitenwänden 4 umgrenzten Innenraum 5 gezeigt.

Der Innenraum 5 ist in einem Teilbereich einer Höhe 6 durch Trennwände 7 in Aufnahmefächer 8 unterteilt. In den Seitenwänden 4 sind Grifföffnungen 8 ausbildende Durchbrüche 10 angeordnet. Ein einen Eckbereich 11 ausbildender Verbindungsbereich 12 aneinander grenzender Seitenwände 4 ist, betrachtet in einer zu einer Aufstandsfläche 13 parallelen Ebene, gerundet ausgebildet.

Der Boden 3 und die Seitewände 4 und bevorzugt die Trennwände 7 bilden als einstückiger Spritzteil eine Grundschale 4 aus auf der zumindest bereichsweise auf einer vom Innenraum 5 abgewandten Oberfläche 15, beispielsweise in dem den Eckbereich 11 ausbildenden Verbindungsbereich 12 eine Deckschale 16 aus einem zu einem ersten Kunststoffmaterial der Grundschale 14 zweiten Kunststoffmaterial mit gleichen oder zum ersten Kunststoffmaterial unterschiedlichen Eigenschaften, z.B. in einer anderen Farbe, mit anderer Härte oder Festigkeit, etc., aufgebracht, die insbesondere durch einen Aufspritzprozess, durch Verfahrensmaßnahmen wie sie später noch im Detail beschrieben sind, mit der Grundschale 14 thermisch verbunden ist.

Selbstverständlich kann die Deckschale 16 auch in wesentlichen Bereichen des Transportkastens 1, z.B. den gesamten Außenoberflächen der Seitenwände 4 und die Eckbereiche 11 umfassend auf der Grundschale 14 vorgesehen sein.

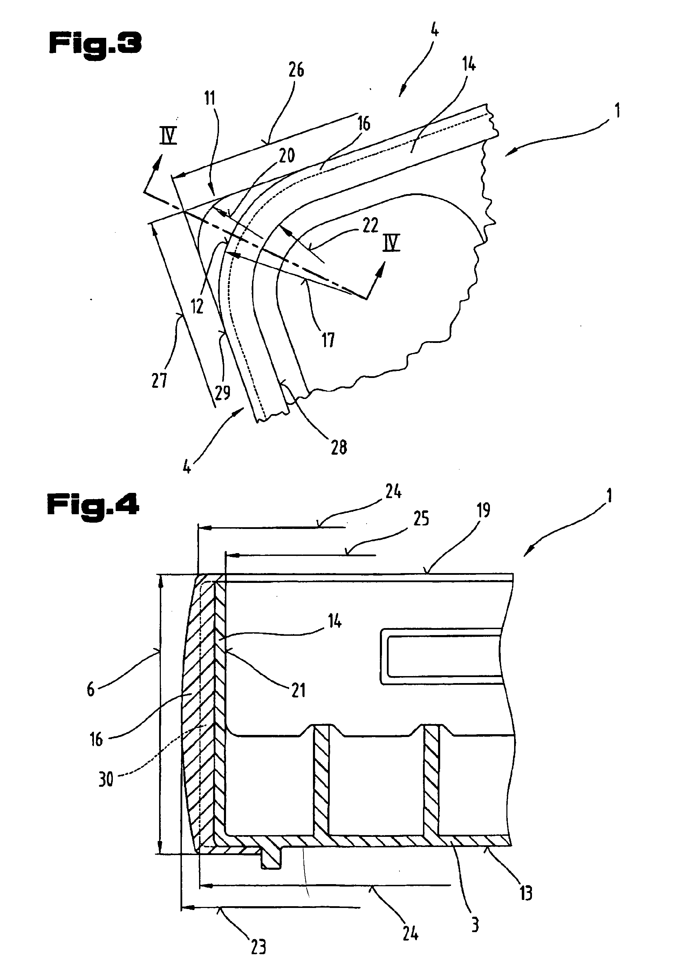

In den Fig. 3 und 4 ist insbesondere den Eckbereich 11 ausbildende Verbindungsbereich 12 zwischen den einander benachbarten, in rechtwinkeligen Ebenen zueinander angeordneten Seitenwänden 4 gezeigt, wobei dieser gerundet ausgebildet ist und ein in zum Boden 3 parallelen Querschnittsebenen betrachteter Rundungsradius 17 einer Umrisskontur 18 über die Höhe 6 des Transportkastens 1 unterschiedliche Werte aufweist.

Im gezeigten Ausführungsbeispiel ist der Rundüngsradius 17 im Bereich des Bodens 3 und einer Oberkante 19 des Transportkastens 1 größer als in einem Bereich dazwischen, insbesondere in der Hälfte der Höhe 6. Ein Verhältnis zwischen dem maximalen Rundungsradius 17 im Bereich des Bodens 3 und der Oberkante 19 des Transportkastens 1 zu einem minimalen Rundungsradius 20 in der Hälfte der Höhe 6 weist einen Wert zumindest größer als 1,5, bevorzugt 2,5 auf.

Eine den Innenraum 5 umgrenzende Innenkontur 21 der Grundschale 14 weist hingegen einen Rundungsradius 22 auf, der über die gesamte Höhe 6 verlaufend unverändert ist.

Dadurch ergibt sich im Eckbereich 11, wie insbesondere einem Diagonalschnitt durch den Transportkasten 1 zu entnehmen, dass ein Außendiagonalmaß 23 etwa in der Hälfte der Höhe 6 größer ist, als ein Außendiagonalmaß 24 im Bereich des Bodens 3 und im Bereich der Oberkante 19. Ein Innendiagonalmaß 25 ist gemäß dem gezeigten Beispiel über die gesamte Höhe 6 gleich, da einander gegenüber liegende Innenkonturlinien zueinander parallel und senkrecht zum Boden 3 verlaufen.

Diese Ausbildung mit den unterschiedlichen Rundungsradien 17, 20 für die äußere Umrisskontur 18 der Deckschale 16 ermöglicht eine Ausbauchung des Eckbereiches 11 und geben dem Transportkasten 1 ein tonnenförmiges Erscheinungsbild, ohne dass die vom Boden 3 durch eine Länge 26 und eine Breite 27 vorgegebene Aufstandsfläche 13 überschritten wird.

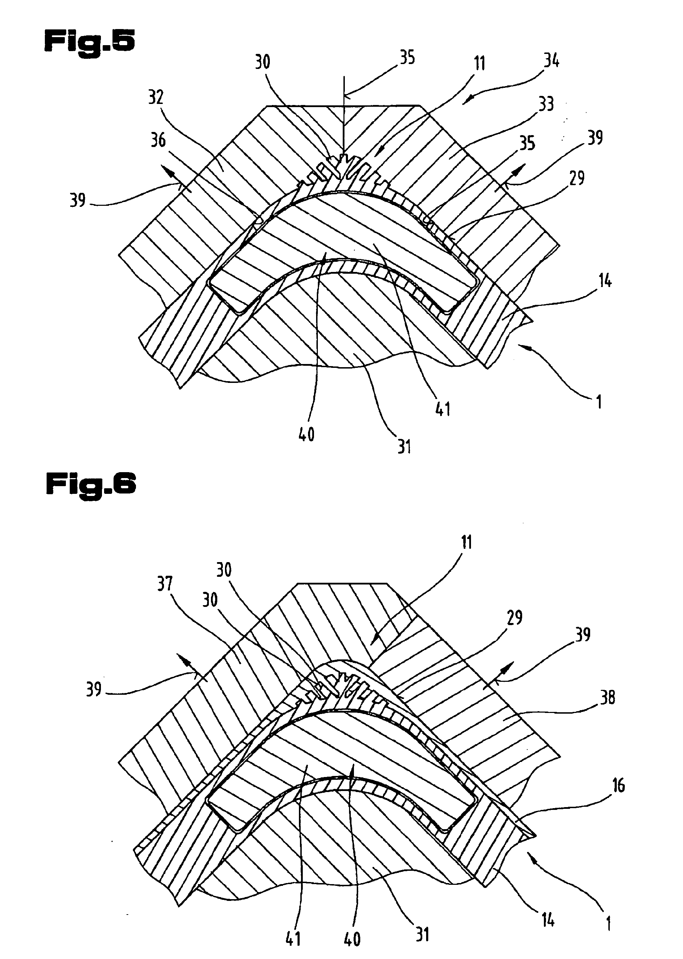

Wie nun besser den Fig. 5 und 6 zu entnehmen, wird diese Ausgestaltung des Eckbereiches 11, ohne dass es zu negativen Auswirkungen an Oberflächen 28, 29 der Grundschale 14 und der Deckschale 16 durch eine Materialanhäufung in diesem Bereich kommt, dadurch erreicht, dass in dem Eckbereich 11, einander zugewandte und verzahnungsartig ineinander greifende rippenförmige Erhöhungen 30 an einander zugewandten Verbindungsflächen der Grundschale 14 und der Deckschale 16 angeordnet sind, die wie im Ausführungsbeispiel gezeigt, über zumindest einen Teilbereich der Höhe 6 und in zur Aufstandsfläche 13 senkrechter Ausrichtung an der Grundschale 14 und der Deckschale 16 einstückig angeformt sind und eine zusätzliche formschlüssige Verbindung ergeben. Darüber hinaus werden die Spritzvorgänge, wie noch später beschrieben, derart zeitlich geregelt, dass es zu einer thermischen Verbindung zwischen der Grundschale 14 und der Deckschale 16 kommt.

Die Fig.5 ist die Ausbildung des Eckbereiches 11 mit den rippenförmigen Erhöhungen 30, welche in einem ersten Spritzvorgang an der Grundschale 14 in einer ersten Kavität zwischen einem Kernwerkzeug 31 und Formteilen 32 eines Spritzwerkzeuges 34, mitgeformt werden, gezeigt. Die Erhöhung 30 beidseits einer etwa diagonal führenden Teilungsebene 35 senkrecht zu Innenflächen 36 der Formteile 32 ausgerichtet und verlaufen, wie bereits vorhergehend beschrieben, zumindest über einen Bereich der Höhe des Transportkastens 1.

In einem Folgespritzvorgang, wie dies weiters in Fig. 6 gezeigt ist, wird das Kernwerkzeug 31 mit der auf ihr geformten Grundschale 14, bevorzugt in einer zweiten Spritzstation, mit eine zweite Kavität ausbildenden Formteilen 37, 38 umgeben und die Deckschale 16 auf die Grundschale 14 aufgespritzt, wobei sich gegengleich und mit den Erhöhungen 30 der Grundschale 14 verzahnungsartig ineinander greifende Erhöhungen 30 ausbilden.

Zur Entformung sind jeweils die Formteile 32, 33, 37, 38 in zur äußeren Oberfläche 29 senkrechter Richtung - gemäß Pfeil 39 - verstellbar.

Wie ebenfalls dcn Figuren zu entnehmen, ist beispielsweise zur Vermeidung eines Materialüberschusses in dem Eckbereich 11 eine im Querschnitt etwa sichelförmige und über die Höhe des Transportkastens 1 bzw. der Seitenwände 4 zum überwiegenden Teil verlaufende Hohlkammer 40 vorgesehen, welche durch die Anordnung eines Kernwerkzeuges 31 erreicht wird.

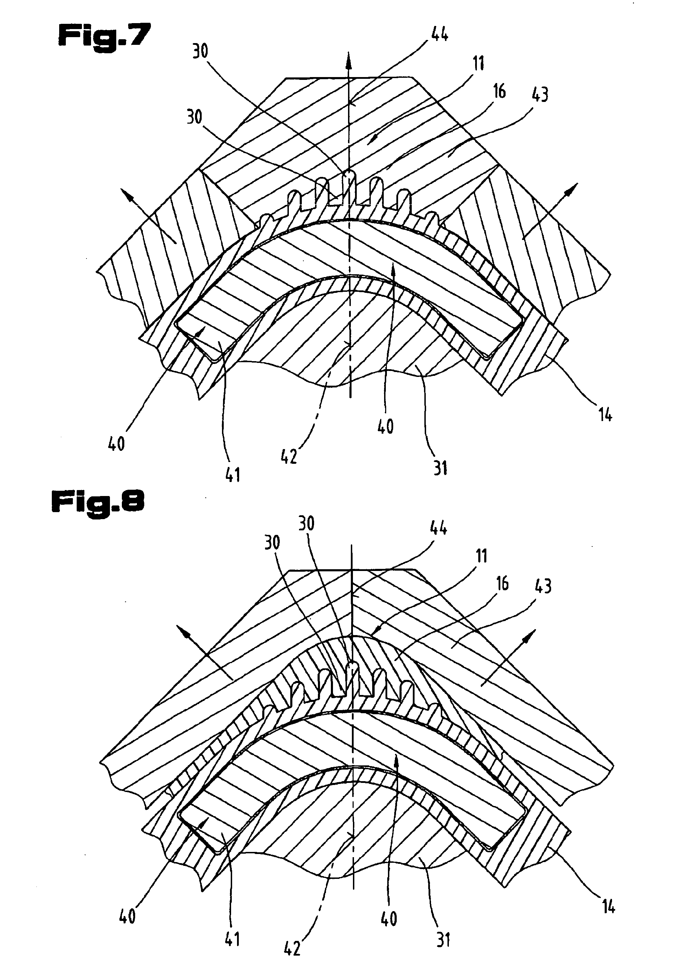

In den Fig. 7 und 8 ist eine andere Ausbildung des Eckbereiches 11 mit den an der Grundschale 14 und der Deckschale 16 angeformten, rippenförmigen Erhöhungen 30 gezeigt, die in Bezug auf eine Diagonalebene 42 zu dieser parallel ausgerichtet sind.

Die Figuren geben ebenfalls die aufeinander folgenden Spritzvorgänge für die Grundschale 14 und die Deckschale 16, sowie eine mögliche Formwerkzeugausbildung wieder.

Zur Herstellung dieser Ausbildung ist ein erstes Spritzformwerkzeug erforderlich mit dem Kemwerkzeug 31, wie bereits vorhergehend beschrieben, welches auch den Formkern 41 für die Hohlkammer 40 aufweist, wobei zumindest für den Spritzvorgang der Grundschale 14 im Eckbereich ein weiterer Formteil 43 erforderlich ist, der für den Entformvorgang in Richtung der Diagonalebene 42 - gemäß Pfeil 44 - verstellbar ist.

Für den weiteren Spritzvorgang, zum Aufspritzen der Deckschale ist diese Ausbildung nicht erforderlich. Selbstverständlich kann aber auch die Ausbildung mit den Formteilen 32, 33, 43 auch für den Folgespritzvorgang Anwendung finden.

Erwähnt wird weiters, dass der Eckbereich 11 bzw. der Verbindungsbereich 12 zwischen den benachbarten Seitenwänden 4 anstelle, wie bisher gerundet dargestellt und beschrieben, auch beispielsweise in einer 45° Abschrägung gestaltet sein kann. Eine sich durch diese Abschrägung ergebene Verbindungsfläche kann beispielsweise über die Höhe des Transportkastens dachflächenförmig gestaltet sein, um beispielsweise im Mittel der Höhe eine größere Diagonalweite als im Bodenbereich und im Kantenbereich des Transportkastens zu erreichen. Weiters kann diese Außenfläche über die Höhe verlaufend z.B. wellig, zackig, oder in Bezug auf die Innenkonturlinie 21 konvex oder konkav verlaufend ausgebildet sein.

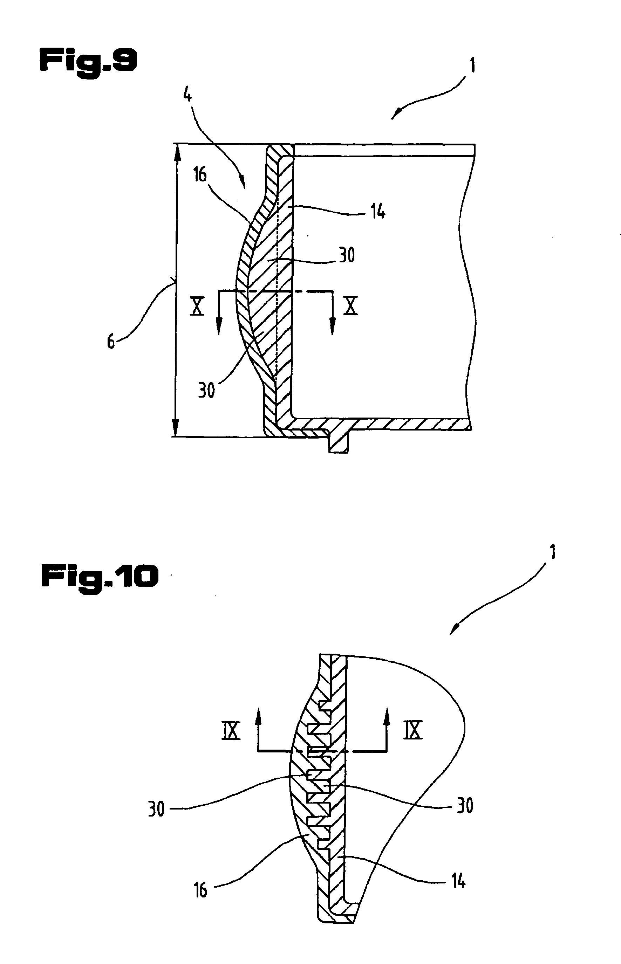

In den Fig. 9 und 10 ist eine andere Ausbildung des Transportkastens 1, bestehend aus der Grundschale 14 und der zumindest auf dieser bereichsweise, beispielsweise im Bereich einer Seitenwand 4, aufgebrachten Deckschale 16 gezeigt. Bei dieser Ausbildung ist beispielsweise im Bereich der Seitenwand 4 durch die Ausbildung der Erhöhungen 30 an der Grundschale 14 und der Deckschale 16 eine Ausbauchung über zumindest einen Teilbereich der Höhe 6 des Transportkastens 1 vorgesehen. Eine derartige Ausbildung ist zwar hinsichtlich des dadurch verbundenen Platzverlustes beim Aneinanderreihen derartiger Transportkästen 1, z.B. auf einer Transportpalette, nur für Sondereinsätze des Transportkastens 1 heranzuziehen. An dieser Stelle sei weiters erwähnt, dass die Erhöhungen 30 durch verschiedene Ausformungen anstelle der gezeigten Rippenform gebildet sein können, z.B. in kreuz- und quer verlaufenden Stegen an der Grundschale 14 oder Deckschale 16 und wobei in verbleibenden Zwischenräumen der Erhöhungen 30 gegengeformte und einen Formschluss ausbildende Erhöhungen 30 ausgebildet bzw. mitgespritzt sind.

### Bezugszeichenaufstellung

- 1: Transportkasten
- 2: Flaschenkasten
- 3: Boden
- 4: Seitenwand
- 5: Innenraum

- 6: Höhe
- 7: Trennwand
- 8: Aufnahmefach
- 9: Griffhöhe
- 10: Durchbruch

- 11: Eckbereich
- 12: Verbindungsbereich
- 13: Aufstandsfläche
- 14: Grundschale
- 15: Oberfläche

- 16: Deckschale
- 17: Rundungsradius
- 18: Umrisskontur
- 19: Oberkante
- 20: Rundungsradius

- 21: Innenkontur
- 22: Rundungsradius
- 23: Außendiagonalmaß
- 24: Außendiagonalmaß
- 25: Innendiagonalmaß

- 26: Länge
- 27: Breite
- 28: Oberfläche
- 29: Oberfläche
- 30: Erhöhung

- 31: Kemwerkzeug
- 32: Formteil
- 33: Formteil
- 34: Spritzwerkzeug
- 35: Teilungsebene

- 36: Innenfläche
- 37: Formteil
- 38: Formteil
- 39: Pfeil
- 40: Hohlkammer

- 41: Formkern
- 42: Diagonalebene
- 43: Formteil
- 44: Pfeil

## Patentansprüche

1. Transportkasten (1) aus Kunststoff-Spritzguss, insbesondere Flaschenkasten, mit durch Trennwände (7) in Aufnahmefächern (8) unterteilten Innenraum (5), mit einer einen Boden (3) und Seitenwände (4) ausbildenden Grundschale (14) aus einem ersten Kunststoff und mit zumindest bereichsweise auf einer Außenoberfläche der Grundschale (14) angeordneter, insbesondere durch Anspritzen, mit dieser thermisch verbundenen Deckschale (16) aus einem zweiten Kunststoff, **dadurch gekennzeichnet, dass** zumindest in einem Verbindungsbereich (12) von einander benachbarten, rechtwinkelig zueinander ausgerichteten Seitenwänden die Grundschale (14) und die Deckschale (16) verzahnungsartig ineinander greifende, einstückig mit der Grundschale (14) und der Deckschale (16) verbundene, Erhöhungen (30) aufweisen, dass der den Eckbereich (11) bildende Verbindungsbereich (12) gerundet ausgebildet ist, wobei ein in zum Boden parallelen Querschnittsebenen betrachteter Rundungsradius (17) des Verbindungsbereiches (12) über die Höhe (6) des Transportkastens (1) unterschiedliche Werte aufweist, und der Rundungsradius (20) auf etwa halber Höhe (6) kleiner ist, als im Bereich des Bodens (3) und/oder einer Oberkante (19) des Transportkastens (1).

2. Transportkasten (1) nach Anspruch 1, **dadurch gekennzeichnet, dass** das Verhältnis zwischen maximalem Rundungsradius (17) im Bereich des Bodens (3) und/oder der Oberkante (19) des Transportkastens (1) zum minimalen Rundungsradius (20) auf etwa halber Höhe (6) einen Wert größer als 1, insbesondere größer als 2,5 aufweist.

3. Transportkasten (1) nach Anspruch 1 oder 2, **dadurch gekennzeichnet, dass** ein Außendiagonalmaß (22) der gegenüberliegenden Außenumrisskonturen im Mittel der Höhe (6) größer ist als im Bereich des Bodens (3) und/oder der Oberkante (19).

4. Transportkasten (1) nach einem der vorhergehenden Ansprüche, **dadurch gekennzeichnet, dass** der Verbindungsbereich (12) durch einen Wandteil der Grundschale (14) und/oder Deckschicht (16) gebildet ist der zu über Oberflächen (28, 29) benachbarter, rechtwinkelig zueinander ausgerichteten Seitenwänden (4) gespannten Ebenen in einem Winkel von 45° verläuft.

5. Transportkasten (1) nach einem der vorhergehenden Ansprüche, **dadurch gekennzeichnet, dass** einander diagonal gegenüberliegende über die Höhe (6) erstreckende Außenkonturlinien der Deckschale (16) gegengleich konkav gekrümmt verlaufend ausgebildet sind.

6. Transportkasten (1) nach einem der vorhergehenden Ansprüche, **dadurch gekennzeichnet, dass** die Außenkonturlinien zueinander gegengleich konvex gekrümmt verlaufend ausgebildet sind.

7. Transportkasten nach einem der vorhergehenden Ansprüche, **dadurch gekennzeichnet, dass** die Außenkonturlinien zueinander gegengleich wellenförmig verlaufend ausgebildet sind.

8. Transportkasten (1) nach einem der vorhergehenden Ansprüche, **dadurch gekennzeichnet, dass** einander diagonal gegenüberliegende Innenkonturlinien der Grundschale etwa zueinander parallel und senkrecht zu einer durch die Aufstandsfläche (13) gespannten Ebene angeordnet sind.

9. Transportkasten (1) nach einem der vorhergehenden Ansprüche, **dadurch gekennzeichnet, dass** im Eckbereich (11) in der Grundschale (14) eine in Richtung der Höhe (6) erstreckende Hohlkammer (40) ausgebildet ist.

10. Transportkasten (1) nach Anspruch 16, **dadurch gekennzeichnet, dass** die Hohlkammer (40) von einem Innenwandteil und einem dazu beabstandeten Außenwandteil der Grundschale (14) begrenzt ist.

11. Transportkasten (1) nach Anspruch 16 oder 17, **dadurch gekennzeichnet, dass** eine Querschnittsform der Hohlkammer (40) sichelförmig gekrümmt ausgebildet ist.

12. Transportkasten (1) nach einem der vorhergehenden Ansprüche, **dadurch gekennzeichnet, dass** die Erhöhungen (30) der Grundschale (14) oder der Deckschale (16) durch ein Steggitter gebildet sind.

13. Transportkasten (1) nach einem der vorhergehenden Ansprüche, dass die Erhöhungen (30) der Grundschale (14) oder der Deckschale (16) durch in Vertiefungen des Steggitters eingreifende Fortsätze gebildet sind.

14. Transportkasten (1) nach einem der vorhergehenden Ansprüche, **dadurch gekennzeichnet, dass** eine Steghöhe über eine Steglänge gleich ist.

15. Transportkasten (1) nach einem der vorhergehenden Ansprüche, **dadurch gekennzeichnet, dass** eine Steghöhe über eine Steglänge unterschiedlich ist.

16. Transportkasten (1) nach einem der vorhergehenden Ansprüche, **dadurch gekennzeichnet, dass** die Deckschale (16) die Grundschale (14) zumindest bereichsweise an Randbereichen, z.B. im Bereich einer Oberkante (19) und/oder einem Grifföffnungsrand überdeckt.

17. Transportkasten (1) nach einem der vorhergehenden Ansprüche, **dadurch gekennzeichnet, dass** die Deckschale (16) zumindest an einem Wandabschnitt der Grundschale (14) angeordnet ist.

18. Transportkasten (1) nach einem der vorhergehenden Ansprüche, **dadurch gekennzeichnet, dass** die Deckschale (16) eine Außenumhüllung der Grundschale (14) ausbildet.

19. Transportkasten (1) nach einem der vorhergehenden Ansprüche, **dadurch gekennzeichnet, dass** die Deckschale (16) zumindest einen Eckbereich (12) umfassend auf der Grundschale (14) angeordnet ist.

20. Transportkasten (1) nach einem der vorhergehenden Ansprüche, **dadurch gekennzeichnet, dass** die Grundschale (14) bevorzugt aus PE besteht.

21. Transportkasten (1) nach einem der vorhergehenden Ansprüche, **dadurch gekennzeichnet, dass** die Deckschale (16) bevorzugt aus PE besteht.

## Claims

1. Transport case (1) made from injection-moulded plastic, in particular bottle crates, with an interior (5) divided into housing compartments (8) by partition walls (7), comprising a main shell (14) incorporating a base (3) and side walls (4) made from a first plastic and with a cover shell (16) made from a second plastic disposed on at least certain regions of an external top face of the main shell (14), in particular thermally joined to it by injecting it on, **characterised in that** the main shell (14) and the cover shell (16) have raised areas (30) integrally joined to the main shell (14) and cover shell (16) locating in one another in the manner of teeth, at least in a joining region (12) of mutually adjacent side walls oriented at right angles to one another, the joining region (12) constituting the corner region (11) being of a rounded design, and a truncation radius (17) of the joining region (12) as viewed in cross-sectional planes parallel with the base differs in value across the height (6) of the transport case (1), and the truncation radius (20) is smaller at approximately half the height (6) than it is in the region of the base (3) and/or a top edge (19) of the transport case (1).

2. Transport case (I) as claimed in claim 1, **characterised in that** the ratio of the maximum truncation radius (17) in the region of the base (3) and/or the top edge (19) of the transport case (1) to the minimum truncation radius (20) at approximately half the height (6) is a value greater than 1, in particular greater than 2.5.

3. Transport case (1) as claimed in claim 1 or 2, **characterised in that** an external diagonal dimension (22) of the oppositely lying external contours at the middle of the height (6) is bigger than it is in the region of the base (3) and/or the top edge (19).

4. Transport case (1) as claimed in one of the preceding claims, **characterised in that** the joining region (12) is formed by a wall part of the main shell (14) and/or cover shell (16) which extends at an angle of 45° towards planes spanned by surfaces (28, 29) of adjacent side walls (4) oriented at right angles to one another.

5. Transport case (I) as claimed in one of the preceding claims, **characterised in that** external contour lines of the cover shell (16) lying diagonally opposite one another extend across the height (6) in a complementary, concavely curved arrangement.

6. Transport case (1) as claimed in one of the preceding claims, **characterised in that** the external contour lines extend in a mutually complementary, convexly curved arrangement.

7. Transport case as claimed in one of the preceding claims, **characterised in that** the external contour lines extend in a mutually complementary, wave-shaped arrangement.

8. Transport case (1) as claimed in one of the preceding claims, **characterised in that** diagonally opposite internal contour lines of the main shell are disposed approximately parallel with one another and perpendicular to a plane formed by the stand surface (13).

9. Transport case (1) as claimed in one of the preceding claims, **characterised in that** a hollow chamber (40) is formed in the corner region (11) of the main shell (14) extending in the direction of the height (6).

10. Transport case (1) as claimed in claim 16, **characterised in that** the hollow chamber (40) is bounded by an internal wall part and an external wall part of the main shell (14) spaced at a distance apart from it.

11. Transport case (1) as claimed in claim 16 or 17, **characterised in that** the hollow chamber (40) curves in a cross-sectional shape of a sickle.

12. Transport case (1) as claimed in one of the preceding claims, **characterised in that** the raised areas (30) of the main shell (14) or cover shell (16) are provided in the form of a web lattice.

13. Transport case (1) as claimed in one of the preceding claims, **characterised in that** the raised areas (30) of the main shell (14) or cover shell (16) are provided in the form of projections locating in recesses of the web lattice.

14. Transport case (1) as claimed in one of the preceding claims, **characterised in that** a web height is constant across a web length.

15. Transport case (1) as claimed in one of the preceding claims, **characterised in that** a web height varies across a web length.

16. Transport case (1) as claimed in one of the preceding claims, **characterised in that** the cover shell (16) overlaps the main shell (14) in at least certain areas of peripheral regions, e.g. in the region of a top edge (9) and/or a gripping orifice edge.

17. Transport case (1) as claimed in one of the preceding claims, **characterised in that** the cover shell (16) is disposed on at least a wall portion of the main shell (14).

18. Transport case (1) as claimed in one of the preceding claims, **characterised in that** the cover shell (16) forms an external casing of the main shell (14).

19. Transport case (1) as claimed in one of the preceding claims, **characterised in that** the cover shell (16) is disposed on the main shell (14) so that it surrounds at least one corner region (12).

20. Transport case (1) as claimed in one of the preceding claims, **characterised in that** the main shell (14) is preferably made from PE.

21. Transport case (1) as claimed in one of the preceding claims, **characterised in that** the cover shell (16) is preferably made from PE.

## Revendications

1. Caisse de transport (1) en moulage par injection de matériau synthétique, en particulier caisse pour bouteilles, avec un espace intérieur (5) divisé par des parois de séparation (7) en cases de réception (8), avec une coque de base (14) réalisant un fond (3) et des parois latérales (4) en un premier matériau synthétique et avec une coque de recouvrement (16) disposée au moins par zones sur une surface extérieure de la coque de base (14), en particulier reliée thermiquement à celle-ci par projection en un deuxième matériau synthétique, **caractérisée en ce qu'**au moins des parois latérales avoisinantes dans une zone de liaison (12), orientées perpendiculairement les unes aux autres, la coque de base (14) et la coque de recouvrement (16) présentent des surélévations (30) venant en prise de denture, reliées en une pièce avec la coque de base (14) et la coque de recouvrement (16), **en ce que** la zone de liaison (12) formant la zone de coin (11) est arrondie, où un rayon de courbure (17) de la zone de liaison (12), vu dans des plans en section transversale parallèles au fond présente sur la hauteur (6) de la caisse de transport (1) des valeurs différentes, et le rayon de courbure (20) à peu près à mi-hauteur (6) est plus petit que dans la zone du fond (3) et/ou une arête supérieure (19) de la caisse de transport (1).

2. Caisse de transport (1) selon la revendication 1, **caractérisée en ce que** le rapport entre le rayon de courbure maximal (17) dans la zone du fond (3) et/ou l'arête supérieure (19) de la caisse de transport (1) au rayon de courbure minimal (20) à peu près à mi-hauteur (6) présente une valeur supérieure à 1, en particulier supérieure à 2,5.

3. Caisse de transport (1) selon la revendication 1 ou 2, **caractérisée en ce qu'**une dimension diagonale extérieure (22) des contours extérieurs opposés est plus grande au milieu de la hauteur (6) que dans la zone du fond (3) et/ou de l'arête supérieure (19).

4. Caisse de transport (1) selon l'une des revendications précédentes, **caractérisée en ce que** la zone de liaison (12) est formée par une partie de paroi de la coque de base (14) et/ou de la couche de recouvrement (16) qui s'étend à des plans formés sur des surfaces (28, 29) de parois latérales (4) avoisinantes, orientées perpendiculairement les unes aux autres, selon un angle de 45°C.

5. Caisse de transport (1) selon l'une des revendications précédentes, **caractérisée en ce que** des lignes de contour extérieures de la coque de recouvrement (16) s'opposant diagonalement, s'étendant sur la hauteur (6), sont courbées d'une manière concave diamétralement opposée.

6. Caisse de transport (1) selon l'une des revendications précédentes, **caractérisée en ce que** les lignes de contour extérieures sont courbées d'une manière convexe diamétralement opposée.

7. Caisse de transport selon l'une des revendications précédentes, **caractérisée en ce que** les lignes de contour extérieures sont ondulées d'une manière diamétralement opposée.

8. Caisse de transport (1) selon l'une des revendications précédentes, **caractérisée en ce que** des lignes de contour intérieures diagonalement opposées de la coque de base sont à peu près parallèles les unes aux autres et sont disposées perpendiculairement à un plan formé par la face d'appui (13).

9. Caisse de transport (1) selon l'une des revendications précédentes, **caractérisée en ce qu'**il est réalisé dans la zone de coin (11) dans la coque de base (14) une chambre creuse (40) s'étendant en direction de la hauteur (6).

10. Caisse de transport (1) selon la revendication 16, **caractérisée en ce que** la chambre creuse (40) est délimitée par une partie de paroi intérieure et une partie de paroi extérieure espacée de celle-ci de la coque de base (14).

11. Caisse de transport (1) selon la revendication 16 ou 17, **caractérisée en ce qu'**une forme en section transversale de la chambre creuse (40) est courbée en forme de croissant.

12. Caisse de transport (1) selon l'une des revendications précédentes, **caractérisée en ce que** les élévations (30) de la coque de base (14) ou de la coque de recouvrement (16) sont formées par une grille à barrettes.

13. Caisse de transport (1) selon l'une des revendications précédentes, **caractérisée en ce que** les élévations (30) de la coque de base (14) ou de la coque de recouvrement (16) sont formées par des prolongements s'engageant dans des creux de la grille à barrettes.

14. Caisse de transport (1) selon l'une des revendications précédentes, **caractérisée en ce qu'**une hauteur de barrette est égale sur une longueur de barrette.

15. Caisse de transport (1) selon l'une des revendications précédentes, **caractérisée en ce qu'**une hauteur de barrette est différente sur une longueur de barrette.

16. Caisse de transport (1) selon l'une des revendications précédentes, **caractérisée en ce que** la coque de recouvrement (16) recouvre la coque de base (14) au moins par zones à des zones de bord, par exemple, dans la zone d'une arête supérieure (19) et/ou d'un bord d'ouverture de prise.

17. Caisse de transport (1) selon l'une des revendications précédentes, **caractérisée en ce que** la coque de recouvrement (16) est disposée au moins à une section de paroi de la coque de base (14).

18. Caisse de transport (1) selon l'une des revendications précédentes, **caractérisée en ce que** la coque de recouvrement (16) forme une enveloppe extérieure de la coque de base (14).

19. Caisse de transport (1) selon l'une des revendications précédentes, **caractérisée en ce que** la coque de recouvrement (16) est disposée sur la coque de base (14) en entourant au moins une zone de coin (12).

20. Caisse de transport (1) selon l'une des revendications précédentes, **caractérisée en ce que** la coque de base (14) est de préférence en PE.

21. Caisse de transport (1) selon l'une des revendications précédentes, **caractérisée en ce que** la coque de recouvrement (16) est réalisée de préférence en PE.
